# EUROPEAN PATENT APPLICATION

(11) **EP 0 817 021 A1**
(43) Date of publication of application: **07.01.1998**
(21) Application number: 97201938.4
(22) Date of filing: 24.06.1997
(51) Int. Cl.: G06F 9/46

(54) **Multimedia server**

(30) Priority: 26.06.1996 NL 1003437
(71) Applicant: Koninklijke PTT Nederland N.V., 9726 AE Groningen (NL)
(72) Inventor: Van Halteren, Aart Tijmen, 9723 AB Groningen (NL)
(74) Representative: Beitsma, Gerhard Romano

(57) **Abstract**

Multimedia server presenting, under the control of user commands, information to the user in a presentation form determined in part by said commands and further generated by means of application programs. For sizeable and advanced information systems in particular, such as a "digital city" or "virtual shop", where users exchange information with the server by means of dynamic pages, the currently used concept, which requires continual interpretation and transfer of PERL scripts to the multimedia server via a common gateway interface (CGI), is too slow. Considerable dynamics enhancement can be achieved by application of an Object Request Broker (ORB) as transmission medium and by storage and reuse of application programs based on PERL scripts which are interpreted once and can be treated as objects.

## Description

### BACKGROUND OF THE INVENTION

The invention relates to a multimedia server comprising means for receiving commands from a user and for presenting, under the control of such commands, information to the user in a presentation form determined in part by said commands and further generated by means of application programs. In particular the invention relates to a server known, at the time of filing of the present patent application, as WWW or Hypertext server.

Such servers send information pages to the user, the content of said information pages being dynamically generated in the server using the server codes coming from the users (server control commands), by means of application programs that can be called and executed by the server under the control of the server codes received. Said programs may be in the form of a binary executable or a script file; in the former case a program can be executed directly, in the latter case after prior conversion to binary code. To date it is customary for said application programs to communicate with the server via the Common Gateway Interface (CGI) of that server. This situation implies that whenever an application program is to be executed in order for a dynamic page to be generated, that program must be supplied, via the CGI, with variables derived from, inter alia, the server codes received from the user. Transfer of these variables to the application program requires considerable time, resulting in unacceptable response times at the users' end.

At the present time, use is often made of application programs based on script files written in the PERL language. This has the advantage of a large amount of freedom in the manipulation of code strings and the availability of extensive program libraries which can be drawn from when creating applications. A disadvantage, however, is that the execution of PERL files requires the use of an interpreter (as is also the case for GWBASIC programs, for example), which means that the execution of applications specified in PERL requires their prior conversion to binary code by an interpreter program.

In summary, application of PERL is, on the one hand, a powerful means for designing and producing information systems that use dynamic pages; on the other hand, their slow processing capability, due to the exchange of variables via the CGI -- which incidentally applies to other scripting languages as well -- and further due to the script files having to be interpreted, is a serious handicap in realising sizeable and advanced information systems. An example of the latter is the "digital city" in which users can exchange information with the server by making use of dynamic pages that evoke the image (metaphor) in the user of being in a city in which many kinds of information can be exchanged, including the engaging in transactions such as buying and offering for sale.

### SUMMARY OF THE INVENTION

The invention aims at overcoming the problems described by not having the server call and execute application programs within that same server via the CGI, but by making use of a so-called Object Request Broker (operating within an ORB server) as intermediary between the multimedia server and one or more application servers residing outside the multimedia server. This offers the possibility of:
- converting (interpreting) PERL scripts installed in an application server into a directly executable binary program once;
- defining the converted programs as objects and having the multimedia server use them via the ORB server, under the control of user commands, when creating and transferring dynamic pages;
- distributing the workload among the multimedia server and various application servers; the PERL scripts converted to executables run on one of the application servers, reducing the load on the multimedia server;
- common (re)use can be made of existing PERL scripts in different application servers.

In practice the architecture proposed by the invention proves to work many times faster than the architecture used to date, which is of great importance for the introduction and the further development and extension of the "digital city" and other advanced multimedia concepts, architectures and systems.

### ILLUSTRATIVE EMBODIMENTS

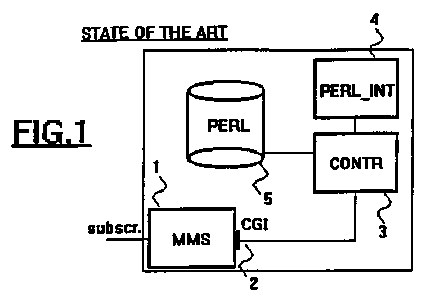

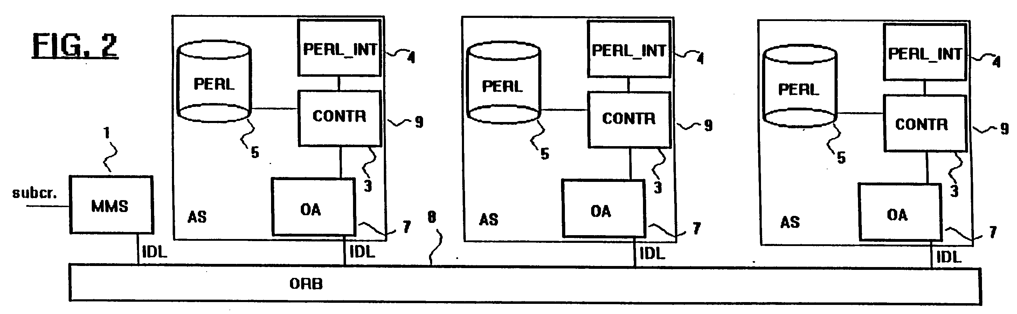

The following contains a discussion, with reference to some illustrations, of the current implementation of multimedia servers and of an illustrative embodiment of a multimedia server that makes use of the architecture according to the invention. Figure 1 shows a schematic representation of a multimedia server according to the state of the art, while figure 2 schematically shows a configuration according to the invention.

Figure 1 shows a multimedia server (MMS) 1, for example a World Wide Web (WWW) server, to which users can make a connection by means of their PC, via a network which is not shown. When a user selects a virtual environment such as a virtual shop or a digital city, the required PERL scripts, which are stored in a memory 5, are transferred to the MMS via a Common Gateway Interface (CGI) by a conversion element 4 -- a PERL interpreter -- under the control of a control element 3. In practice, said elements are parts of the MMS. When the virtual environment "visited" by the user is very complex, a large number of PERL applications have to be exchanged between the element 3 and the MMS 1. This puts a heavy load on the processing capacities of both the MMS and the element 3.

Figure 2 schematically shows the configuration according to the invention. The MMS 1 is connected to an Object Request Broker (ORB) 8, to which a number of Application Servers (AS) 9 -- not belonging to the MMS -- are also connected. Via the ORB 8, software objects forming part of the structure of the virtual environment selected by the user can -- via object adapters OA 7 -- be transferred to the MMS. These objects may have been generated in different application servers AS 9. Within an AS, object generation takes place from a PERL database 5 in which the source codes of the objects actually reside. The objects requested by the MMS via the ORB are created once by an interpreter 4, from the PERL source codes 5, and transferred to the MMS.

### REFERENCES

Networking objects with CORBA
Betz, M.
Dr Dobb's J., Vol. 20, no.11, pp. 18-20, 22, 25-6, Nov. 1995

## Claims

1. Multimedia server comprising means for receiving commands from a user and for presenting, under the control of such commands, information to the user in a presentation form determined in part by said commands and further generated by means of application programs, CHARACTERISED IN THAT the multimedia server (1) is connected, by means of an Object Request Broker (8), to one or more application servers (9) containing application programs that can be called by the multimedia server under the control of the user commands, whereas objects, generated by said application programs, are transferred, via the Object Request Broker, to the multimedia server.
